## Europäisches Patentamt
## European Patent Office
## Office européen des brevets

(19)

(11) Veröffentlichungsnummer: **0 158 160**
**A2**

# EUROPÄISCHE PATENTANMELDUNG

(21) Anmeldenummer: **85103053.6**

(22) Anmeldetag: **16.03.85**

(51) Int. Cl.⁴: **A 01 K 61/00**
**A 01 G 9/14**

(30) Priorität: **10.04.84 DE 3413461**

(43) Veröffentlichungstag der Anmeldung:
**16.10.85 Patentblatt 85/42**

(84) Benannte Vertragsstaaten:
**AT CH DE FR GB IT LI SE**

(71) Anmelder: **Born, Günter Heinrich**
**Bahnhofstrasse 30**
**D-7410 Reutlingen(DE)**

(72) Erfinder: **Born, Günter Heinrich**
**Bahnhofstrasse 30**
**D-7410 Reutlingen(DE)**

(74) Vertreter: **Möbus, Rudolf, Dipl.-Ing. et al,**
**Hindenburgstrasse 65**
**D-7410 Reutlingen(DE)**

(54) **Einrichtung zur Zucht von Wassertieren, insbesondere Fischen.**

(57) Die Einrichtung zur Zucht von Wassertieren, insbesondere Fischen, weist mindestens einen Behälter (1) auf, der im Bereich seiner oberen Öffnung mit einem Tragrahmen (8) versehen ist und der eine Abfischeinrichtung aufweist, zu welcher mindestens eine bewegbar angeordnete Wandung (2) des Behälters gehört. Der Behälter läßt sich zur Anordnung auf dem Lande oder im Wasser ausbilden und, insbesondere über seinen Tragrahmen, mit verschiedenen anderen Einrichtungen (z. B. 10) oder anderen Behältern zu einem ganzen Nahrungsversorgungssystem kombinieren.

FIG. 1

P 4747 EU

0158160

Einrichtung zur Zucht von Wassertieren,
insbesondere Fischen

Die Erfindung betrifft eine Einrichtung zur Zucht von Wassertieren, insbesondere Fischen, mit mindestens einem oben
offenen Behälter.

Der Erfindung liegt die Aufgabe zugrunde, eine solche Einrichtung so zu gestalten, daß sie vielseitig einsetzbar
und mit Zusatzeinrichtungen kombinierbar ist und sich
leicht betreiben läßt.

Die gestellte Aufgabe wird mit einer Einrichtung der eingangs genannten Art erfindungsgemäß dadurch gelöst, daß
sie mit einer Einrichtung zur Erleichterung des Einfangens
der Wassertiere (Abfischeinrichtung) versehen ist, die
mindestens eine innerhalb des im Bereich seiner oberen
Öffnung mit einem Tragrahmen versehenen Behälters bewegbar

P 4747 FU

angeordnete Wandung aufweist. Durch Verschieben der Wandungen können die Fische beim Abfischen auf einen kleineren Raum zusammengedrängt und dadurch leichter entnommen werden.

Die erfindungsgemäß ausgebildete Einrichtung kann in allen Regionen der Erde auf dem Lande oder in Gewässern eingesetzt werden, wobei der Tragrahmen des Behälters seine Verankerung und Koppelung mit anderen Einrichtungen oder Einrichtungsteilen und auch die Anordnung der Abfischeinrichtung erleichtert, mit welcher ein rationeller Betrieb der Zuchteinrichtung erreicht wird.

Der mindestens eine Behälter der Einrichtung kann vorteilhafterweise Zwischenwandungen aufweisen, die mindestens teilweise mit Wasserdurchtrittsöffnungen versehen sind und von denen mindestens eine verstellbar oder verschiebbar angeordnet ist. Die Behälter lassen sich aus Einzelteilen in beliebiger und passender Größe gestalten. Die Innenwandungen können hierbei auf Führungsschienen verstellbar gelagert sein oder aber auch als flexible Wandungen, beispielsweise Netzwandungen, ausgebildet sein. Maschinelle Antriebsvorrichtungen für die verstellbaren Behälterwandungen lassen sich leicht auf dem Tragrahmen des Behälters verankern.

Durch die Koppelung des Behälters mit Auftriebskörpern läßt sich die Einrichtung in Gewässern schwimmend oder auch absenkbar anordnen, wobei die Abfischeinrichtung erfindungsgemäß so ausgebildet sein kann, daß sie ein Abfischen auch bei abgesenktem Behälter erlaubt. Hierzu

P 4747 EU

kann die Abfischeinrichtung beispielsweise eine auf dem Behälterboden oder einem Zwischenboden horizontal aufliegende verstellbare Wandung aufweisen, die sich über den Gesamtquerschnitt des Behälters oder einer Behälterkammer erstreckt und mittels mindestens eines Seiles o. dgl. in Richtung auf die obere Behälteröffnung anhebbar ist. Zur Überbrückung des zwischen der Öffnung des abgesenkten Behälters und der Wasseroberfläche bestehenden Abstandes beim Abfischen kann auf die horizontale verstellbare Wandung ein Kasten gleichen Querschnitts aufgesetzt sein, dessen Höhe mindestens dem erwähnten Abstand entspricht. Es kann aber auch eine entlang des oberen Behälterrandes angeordnete und mittels Preßluft auffaltbare Schlauchhülle vorgesehen sein, die in aufgefaltetem Zustand einen seitlich geschlossenen Schacht zwischen der Behälteröffnung und der Wasseroberfläche bildet, durch welchen die Fische nach oben gebracht werden können.

Der Tragrahmen des Behälters der Einrichtung erleichtert einen unterschiedlichen Einsatz der Einrichtung und erlaubt auch den Aufsatz eines Tragrahmens für eine Überdachung zum Schutz der Abfischeinrichtung und/oder zur Bildung von Kondenswasser, beispielsweise in einem Aufsatzgehäuse, das gleichzeitig als Gewächshaus für Pflanzen dienen kann. Der Behälter kann für den Einsatz in kalten Gegenden mindestens in seinem die verstellbare Wandung aufweisenden Bereich beheizbar ausgebildet sein. Auch kann der Behälter der Einrichtung allein oder zu mehreren aneinandergereiht einen wasserführenden Kanal oder mindestens einen Abschnitt eines solchen Kanales bilden.

- 4 -

P 4747 EU

Die Einrichtung erlaubt eine Nahrungsmittelproduktion auch an Stellen, die sonst für diesen Zweck ungenutzt bleiben würden, beispielsweise in Flüssen, in unfruchtbaren Uferregionen, in Kanalbetten usw., wobei die Wassertiere und auch Pflanzen in aufgesetzten Überdachungen gegen Raubtiere und Diebe geschützt unterbringbar sind.

Ausführungsbeispiele erfindungsgemäß ausgebildeter Einrichtungen werden nachfolgend anhand der beiliegenden Zeichnung näher erläutert.

Im einzelnen zeigen:

Fig. 1        eine schematische Darstellung eines
              ersten Ausführungsbeispieles der Einrichtung mit einem schwimmenden Behälter;

Fig. 2        einen schematischen Querschnitt durch
              einen aus mehreren gleichen Bauteilen
              zusammengesetzten Behälter der Zuchteinrichtung;

Fig. 3        einen Querschnitt durch ein Ausführungsbeispiel eines Behälters mit einer
              vertikalen verstellbaren Außenwandung;

Fig. 4        einen schematischen Schnitt durch eine
              Ausführungsform der Einrichtung, bei
              welchem ebenfalls ein Schwimmbehälter
              Verwendung findet;

P 4747 EU

| Fig. 5 | eine schematische Darstellung eines mit einem Aufsatz versehenen Standbehälters, der einen Abschnitt eines Wasserkanales bilden kann; |
|---|---|
| Fig. 6 | eine Draufsicht auf einen Behälter nach Fig. 5 in gegenüber Fig. 5 vergrößertem Maßstab; |
| Fig. 7 und 8 | schematische Darstellungen von zwei Ausführungsbeispielen von doppelwandigen Behältern der Einrichtung; |
| Fig. 9 | eine Draufsicht auf eine Einrichtung mit einem zylindrischen Behälter; |
| Fig. 10 | einen schematischen Längsschnitt durch den Behälter nach Fig. 9; |
| Fig. 11 | eine schematische Seitenansicht einer Einrichtung mit einem an Bojen gehaltenen absenkbaren Behälter; |
| Fig. 12 | eine schematische Draufsicht auf die Einrichtung nach Fig. 11. |

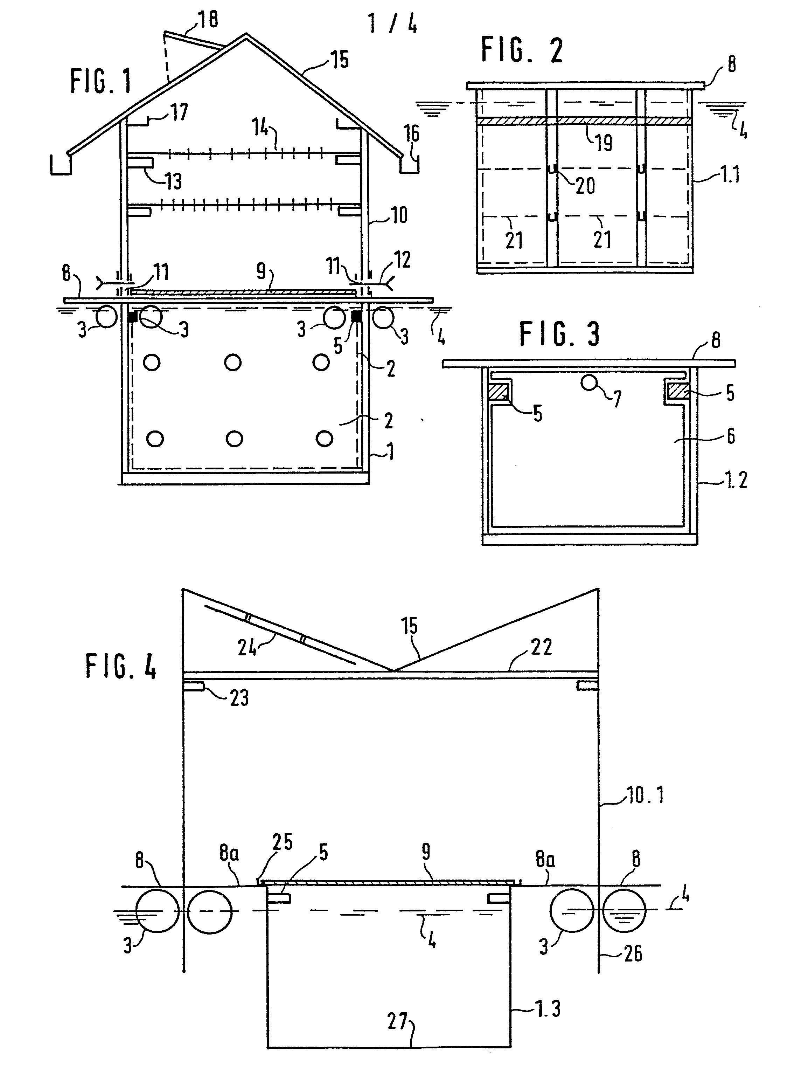

Die Einrichtung nach Fig. 1 weist einen aus einem Stützrahmen und Wandungen aus Stahl bestehenden quaderförmigen Behälter 1 auf, dessen Außenwandungen mindestens teilweise gelocht sind. Der Behälter 1 ist als Schwimmbehälter ausgebildet und zu diesem Zweck im Bereich seiner oberen Öff-

P 4747 EU

nung mit hohlen Auftriebskörpern 3 versehen, die aus Stabilitätsgründen sowohl außerhalb als auch innerhalb des
Behälters 1 angebracht sind. Die Auftriebskörper 3 sind so
bemessen, daß der Behälter mit seinem oberen Tragrahmen 8
auf der Höhe des Wasserspiegels 4 liegt. In seinem Innern
ist der Behälter 1 mit einer vertikalen Innenwandung 2
versehen sein, die entlang von auf der Innenseite des Behälters angeordneten Schienen 5 verschiebbar gelagert
ist.

Der Behälter 1.2 nach Fig. 3 ist mit einer auf Schienen 5
verschiebbaren vertikalen Außenwandung 6 versehen, an welcher eine Öse 7 zum Einhängen eines Zugseiles oder einer
Kette einer Verstelleinrichtung ausgebildet ist. Das Zugseil kann mit einer auf dem Tragrahmen 8 angeordneten
Seilwinde oder einer anderen, nicht dargestellten Antriebsvorrichtung verbunden sein.

Gemäß Fig. 1 ist die obere Öffnung des Behälters 1 mit
einem Abdeckgitter 9 versehen, das sowohl zum Schutz der
im Behälter 1 gezüchteten Fische als auch als Laufboden
dient. Auf den Tragrahmen 8 des Behälters 1 ist eine Abdeckung nach Art eines Gewächshauses 10 aufgesetzt. Hierzu
kann der Tragrahmen 8 mit einer Aufnahmerinne 11 versehen
sein, welche die Gewächshauswandungen aufnimmt und in welcher sie durch Bolzen 12 gesichert sind. Auf Stegen 13 des
Gewächshausgerüstes sind Gitterböden 14 aufgelegt, auf
denen Pflanzen gezüchtet werden können. Das im Innern des
Gewächshauses 10 kondensierende Wasser kann an den Wänden
in den Behälter 1 ablaufen oder wird vom Dach 15 in Rinnen
17 gesammelt. Am Dach 15 des Gewächshauses 10, das mit

P 4747 EU

Klappfenstern 18 zur Lüftung versehen ist, ablaufendes
Regenwasser wird ebenfalls in Rinnen 16 gesammelt und kann
von dort beispielsweise zur Versorgung der Pflanzen verwendet werden.

Der in Fig. 2 dargestellte Behälter 1.1 weist einen nach
einem Rastermaß aus mehreren gleichartigen Einzelteilen 20
zusammengesetzten Tragrahmen auf. Der Innenraum des Behälters 1.1 ist durch gelochte oder ungelochte Zwischenwandungen 21 in mehrere Kammern unterteilt, in denen unterschiedliche Tiere oder Pflanzen gezüchtet werden können.
Die Innenwandungen können verstellbar sein. Eine Gitterwandung 19 ist mit Abstand vom oberen Tragrahmen 8 des
Behälters 1.1 angeordnet.

Bei der Ausführungsform nach Fig. 4 ist der Tragrahmen 8
mit Abstand vom Behälterrand 25 angeordnet und über Streben 8a mit dem Behälterrand 25 verbunden. Die Auftriebskörper 3 sind unterhalb des Tragrahmens 8 und der Verbindungsstreben 8a befestigt, so daß der das Abdeckgitter 9
tragende Rand 25 des Behälters über dem Wasserspiegel 4
verläuft. Das über dem Behälter 1.3 angeordnete Gehäuse
10.1 ist über Stützen 26 am Tragrahmen 8 verankert und
deckt nicht nur den Behälter selbst, sondern auch noch
einen von den Streben 8a überbrückten Randbereich rund um
den Behälter 1.3 ab. Das Gehäuse 10.1 ist mit einem einwärts geneigten Dach 15 versehen, das durch Querstreben 22
gehalten wird, die auf Konsolen 23 der Stützen 26 ruhen.
Auf der Innenseite des Daches 15 sind mit Abstand von der
Dachwandung Platten 24 als Kondensationsplatten oder zur

P 4747 EU

Abdeckung angeordnet. Das sich im Bereich des Daches 15 bildende Kondensationswasser tropft in der Mitte des Gehäuses 10.1 auf die Gitterwandung 9 des Behälters 1.3 ab.

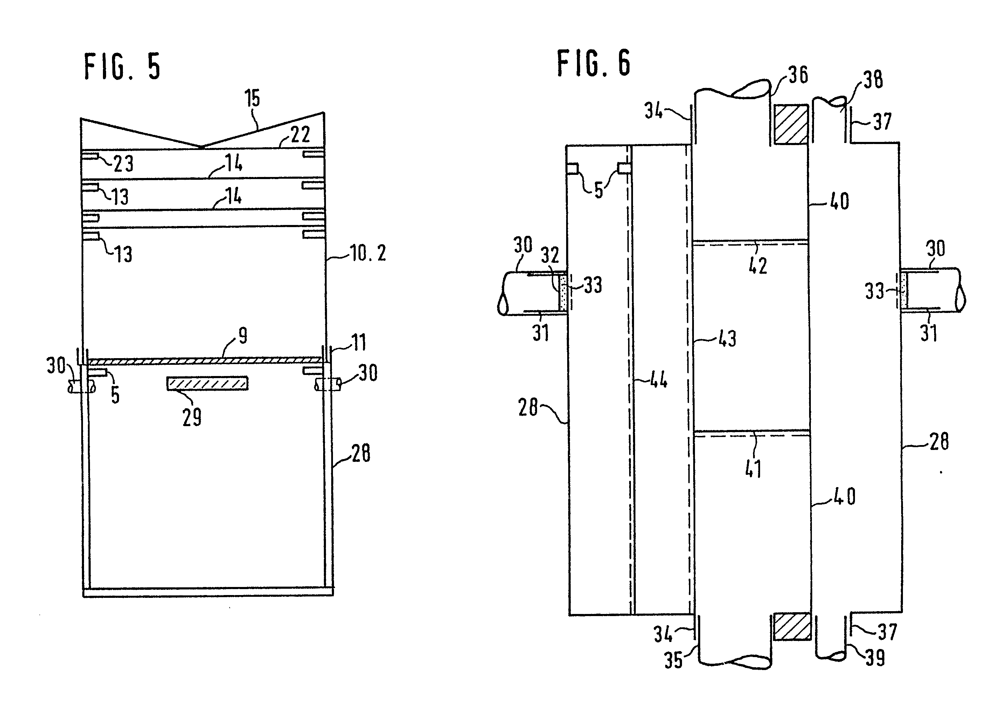

Fig. 5 zeigt eine Einrichtung mit einem nicht als Schwimmbehälter ausgebildeten Fischzuchtbehälter 28, der an seinem oberen Randbereich Überlaufschlitze 29 und Ablauf- oder Zulaufrohre 30 aufweist. Auf diesen Behälter ist ein Gewächshaus 10.2 mit einwärts geneigtem Dach 15 angeordnet, in welchem wie beim Ausführungsbeispiel nach Fig. 1 auf Gitterböden 14 Pflanzen gezüchtet werden können. Mehrere Behälter 28 können miteinander zu einem Wasserkanal oder Kanalabschnitt verbunden werden und können in mehrere Kammern unterteilt sein. Über die Ablaufrohre können beispielsweise Felder bewässert werden.

Die Draufsicht der Fig. 6 zeigt, daß der Behälter 28 durch mehrere Vertikalwandungen 40, 41, 42, 43 und 44, die gelocht sein können, in mehrere Kammern gegliedert ist, die Anschlußstutzen 31, 34, 37 nach außen aufweisen können, an welche Rohrleitungen 30, 35, 36, 38, 39 anschließbar sind. An den beiden gezeigten Anschlüssen 31 sind Schieber 32 und Siebe 33 angeordnet. In den einzelnen Kammern können auf Führungsschienen 5 verstellbare Zwischenwandungen angeordnet sein. Einzelne der Kammern können als reine Wasserdurchlaufkammern zwischen aneinandergereihten mehreren Behältern 28 dienen.

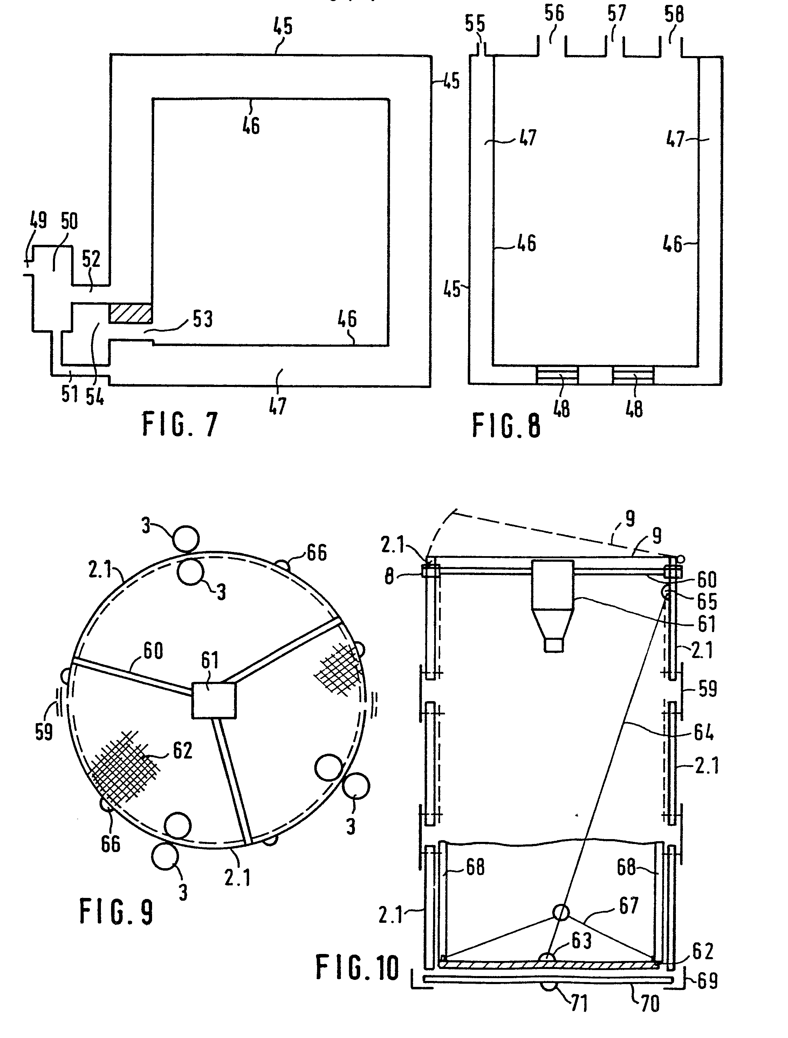

Die Fig. 7 und 8 zeigen jeweils einen doppelwandigen Fischzuchtbehälter mit einer Außenwandung 45 und einer Innenwandung 46. Durch den Zwischenraum 47 zwischen den

P 4747 EU

beiden Wandungen 45 und 46 kann Warmwasser hindurchgeleitet werden, um den Behälter zu erwärmen. Bei dem in Fig. 7 dargestellten Ausführungsbeispiel ist eine Wärmepumpe 50 angedeutet, der Wasser über eine Leitung 49 zugeführt wird. Der Eingang und der Ausgang der Wärmepumpe 50 sind über Leitungen 52 und 51 mit dem Zwischenraum 47 verbunden. Der Innenbehälter ist mit einem Auslauf 53 versehen, der in eine Ablaufkammer 54 führt.

Beim Ausführungsbeispiel nach Fig. 8 sind Einlaßöffnungen 56, 57 und 58 für Sauerstoff, Frischwasser und Futtermittel in den doppelwandigen Behälter dargestellt. In den Zwischenraum 47 führt eine Anschlußleitung 55. Die Innenwandung 46 ist mittels Schienen 48 auf der äußeren Wandung 45 abgestützt.

Die Fig. 9 und 10 zeigen einen kreiszylindrischen Behälter, der aus mehreren Einzelringen 2.1 zusammengesetzt ist und durch über seinen Umfang gleichmäßig verteilte, an seinem oberen Ende innen und außen angebrachte Auftriebskörper 3 als Schwimmkörper ausgebildet ist. Sein oberes Ende ist mit einer abklappbaren Gitterwandung 9 verschlossen. Sein Tragrahmen 8 hat die Form eines einfachen Halteringes. Unten ist der Behälter durch eine Bodenwandung 70 verschlossen, die über einen Winkelrahmen 69 mit dem anschließenden Behälterring 2.1 verbunden ist und eine äußere Öse 71 zum Anbringen einer Ankerkette o. dgl. aufweist. Die einzelnen Behälterringe 2.1 sind durch überlappende äußere Verbindungsringe 59 miteinander verbunden. In der oberen Öffnung ist ein Futterautomat 61 mittig angeordnet, der über Stege oder Seile 60 am Tragrahmen 8 verankert

P 4747 EU

ist. Im Innern des Behälters ist eine über den ganzen Behälterquerschnitt reichende Siebplatte 62 parallel zur
Bodenplatte 70 angeordnet. An Ösen 63 der Siebplatte 62
sind Tragseile 67 befestigt, die mit einem Zugseil 64 verbunden sind, an welchem die Siebwandung 62 zum Abfischen
nach oben gezogen werden kann. Das Zugseil ist beim dargestellten Ausführungsbeispiel durch eine Umlenköse 65 geführt. Bei größeren Behältern kann eine Seilwinde zum
Hochziehen der Gitterwandung 62 eingesetzt werden. Auf die
Gitterwandung 62 ist ein Rohrabschnitt 68 aufgesetzt, der
mit der Gitterwandung angehoben wird. Der Behälter ist
auch auf seiner Außenseite mit Ösen 66 zum Anbringen von
Verankerungstrossen o. dgl. versehen.

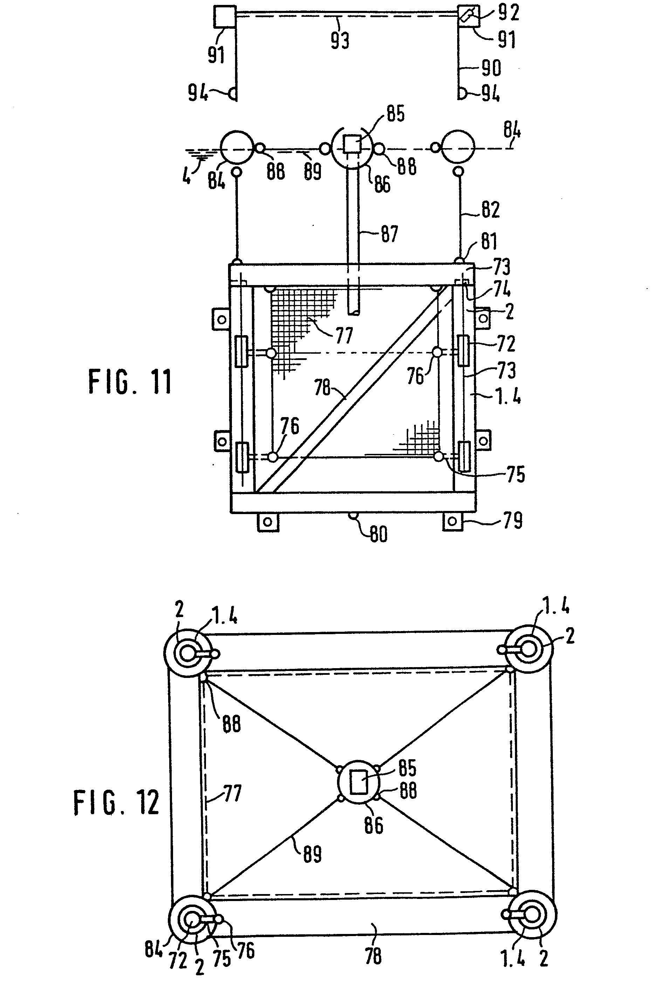

Die Fig. 11 und 12 zeigen wieder eine Einrichtung mit
einem unter den Wasserspiegel 4 absenkbaren Behälter 1.4.
Der Behälter 1.4 besteht aus einem Rahmen aus Rohren 73,
in welche Auftriebskörper 72 eingesetzt sind, die mittels
Preßluft leergepumpt werden können. Die Preßluftleitungen
sind in Rahmenteilen 74 geschützt verlegt. Die Auftriebskörper 72 sind mit in Ösen 76 endenden Stegen 75 verbunden, an denen ein Fischnetz 77 verankert ist, das somit
zusammen mit den Auftriebskörpern 72 bewegt wird.
Der Behälter 1.4 ist über Trossen 82, die an Ösen 81 angreifen, mit Schwimmbojen 84 verbunden. In einer Schwimmboje 86 ist auch ein Futterautomat 85 angeordnet, von dem
aus ein Schlauch 87 in den Fischzuchtbehälter hinunterragt. Die Schwimmboje 86 kann über an Ösen 88 angreifende
Seile 89 genau über der Behältermitte gehalten werden.

P 4747 EU


Zum Abfischen kann eine faltbare Schlauchhülle 90 vorgesehen sein, die in einem aufblasbaren Schlauchkragen 91
endet, der mit einem Preßluftventil 92 versehen ist. Die
Schlauchhülle kann mittels Ösen 94 am oberen Rand des abgesenkten Behälters befestigt werden. Durch Aufblasen des
Schlauchkragens 91 steigt die Schlauchhülle 90 vom oberen
Rand des Behälters hoch zum Wasserspiegel 4 und bildet
einen Schacht, aus welchem die aus dem hochbewegten Fischnetz 77 austretenden Fische abgeschöpft werden können. Im
Schlauchkragen 91 ist eine gelochte öffenbare Abdeckwandung 93 eingesetzt, die bei zusammengefalteter Schlauchhülle 90 die Abdeckung des Behälters 1.4 bildet.



/L

0158160

P 4747 EU

Patentansprüche:

1. Einrichtung zur Zucht von Wassertieren, insbesondere
   Fischen, mit mindestens einem Behälter mit einer oberen
   Öffnung, dadurch gekennzeichnet, daß sie mit einer Einrichtung zur Erleichterung des Einfangens der Wassertiere (Abfischeinrichtung) versehen ist, die mindestens
   eine innerhalb des im Bereich seiner oberen Öffnung mit
   einem Tragrahmen (8) versehenen Behälters (1) bewegbar
   angeordnete Wandung (2, 6, 62, 77) aufweist.

2. Einrichtung nach Anspruch 1, dadurch gekennzeichnet, daß
   der Behälter (1) Zwischenwandungen (z. B. 40 - 44) aufweist, die mindestens teilweise mit Wasserdurchtrittsöffnungen versehen sind und von denen mindestens eine
   verstellbar oder verschiebbar angeordnet ist.

3. Einrichtung nach Anspruch 1 oder 2, dadurch gekennzeichnet, daß mindestens ein Teil der wasserdurchlässigen
   Innenwandungen (z. B. 77) flexibel ist.

4. Einrichtung nach einem der Ansprüche 1 bis 3, dadurch
   gekennzeichnet, daß die verstellbare Wandung (2) des
   Behälters (1) auf Führungsschienen (5) gelagert ist.

0158160

P 4747 EU

5. Einrichtung nach einem der Ansprüche 1 bis 4, dadurch gekennzeichnet, daß die verstellbare Behälterwandung (2, 6, 62, 77) mit einer Antriebsvorrichtung (z. B. 72) gekoppelt ist.

6. Einrichtung nach einem der Ansprüche 1 bis 5, dadurch gekennzeichnet, daß die verstellbare Wandung (2, 6) vertikal und parallelverschiebbar angeordnet ist.

7. Einrichtung nach einem der Ansprüche 1 bis 5, dadurch gekennzeichnet, daß die verstellbare Wandung (62) auf den Behälterboden (70) oder einen horizontalen Zwischenboden aufsetzbar ist, sich über den Gesamtquerschnitt des Behälters oder einer Behälterkammer erstreckt und mittels mindestens eines Seiles (64, 67) einer Trosse, Kette o. dgl. in Richtung auf die obere Behälteröffnung anhebbar ist (Fig. 9, 10).

8. Einrichtung nach Anspruch 7, dadurch gekennzeichnet, daß auf die horizontale verstellbare Wandung (62) ein oben und unten offener Kasten (68) gleichen Querschnitts aufgesetzt ist.

9. Einrichtung nach einem der Ansprüche 1 bis 8, dadurch gekennzeichnet, daß der Behälter als Schwimmbehälter mit gasfüllbaren Auftriebskörpern (3) versehen und in ein Gewässer absenkbar ausgestaltet ist, Wasserdurchtrittsöffnungen in seiner Außenwandung (2) aufweist und oben durch eine Siebwandung (9) verschließbar ist.

P 4747 EU

10. Einrichtung nach einem der Ansprüche 1 bis 9, dadurch gekennzeichnet, daß am Tragrahmen (8) des Behälters (1) Halte- und Antriebsorgane für die Abfischeinrichtung und/oder Auftriebskörper (84, 3) und/oder ein Behälteraufsatz (90) angeordnet bzw. befestigbar sind.

11. Einrichtung nach Anspruch 10, dadurch gekennzeichnet, daß der Tragrahmen (8) mit Abstand vom oberen Behälterrand (25) verläuft und durch Streben (8a) mit dem Behälter verbunden ist (Fig. 4).

12. Einrichtung mit einem Schwimmbehälter nach einem der Ansprüche 1 bis 11, dadurch gekennzeichnet, daß die Abfischeinrichtung eine entlang des oberen Behälterrandes angeordnete, mittels Preßluft auffaltbare Schlauchhülle (90) aufweist, die in aufgefaltetem Zustand einen seitlich geschlossenen Schacht zwischen der Behälteröffnung und der Gewässeroberfläche (4) bildet.

13. Einrichtung nach einem der Ansprüche 1 bis 12, dadurch gekennzeichnet, daß der Behälter allein oder zu mehreren aneinandergereiht mindestens einen Abschnitt eines wasserführenden Kanales bildet.

14. Einrichtung nach einem der Ansprüche 1 bis 13, dadurch gekennzeichnet, daß auf den Tragrahmen (8) des Behälters eine Überdachung (10) zum Schutz der Abfischeinrichtung und/oder zur Bildung von Kondenswasser aufgesetzt ist.

0158160

P 4747 EU

15. Einrichtung nach Anspruch 14, dadurch gekennzeichnet, daß die Überdachung (10) als Gewächshaus für Pflanzen ausgebildet ist.

16. Einrichtung nach einem der Ansprüche 1 bis 15, dadurch gekennzeichnet, daß mindestens sein die verstellbare Wandung aufweisender Bereich des Behälters beheizbar ausgebildet ist.

FIG. 1

FIG. 2

FIG. 3

FIG. 4

# FIG. 5

# FIG. 6

0158160

FIG. 7

FIG. 8

FIG. 9

FIG. 10

0158160

FIG. 11

FIG. 12